# EUROPEAN PATENT SPECIFICATION

(11) **EP 2 730 791 B1**
(45) Date of publication and mention of the grant of the patent: **30.12.2015**
(21) Application number: 13190123.3
(22) Date of filing: 24.10.2013
(51) Int. Cl.: F16C 3/08, F16C 9/02, F16C 23/08, F16C 23/04

(54) **Crankshaft, bearing assembly and large multi-cylinder two-stroke diesel engine**
Kurbelwellenlageranordnung und großer mehrzylindriger Zweitaktdieselmotor
Vilebrequin, ensemble de roulement et gros moteur diesel deux temps à cylindres multiples

(30) Priority: 09.11.2012 DK 201200704
(43) Date of publication of application: 14.05.2014
(73) Proprietor: MAN Diesel & Turbo, filial af MAN Diesel & Turbo SE, Tyskland, 2450 Copenhagen SV (DK)
(72) Inventor: Olsson, Martin, 21436 Malmö (SE)
(74) Representative: Nordic Patent Service A/S

(56) References cited:
- EP-A1- 2 041 418
- EP-A2- 0 168 153
- EP-A2- 0 800 008
- DE-C1- 4 330 565
- FR-A1- 2 847 314

## Description

The present invention relates to a crankshaft, a bearing assembly and large multi-cylinder two-stroke engine of the crosshead type. The invention relates in particular to a crankshaft with throws interconnected by main journals and to a bearing assembly with bearing shells for the main journals of the crankshaft and to a large multi-cylinder two-stroke engine of the crosshead type including such a crankshaft and bearing assembly.

### BACKGROUND ART

Slow-running large two-stroke crosshead diesel engines are enormous and highly effective power-producing machines. The largest of these engines produce about 120.000 kW at 94 rpm, have an overall length of 36 meters and weigh close to 3800 tons.

Engines of this type are divided in cylinder sections, which is reflected in the bedplate by adjacent cross girders, in the A-shaped crankcase frame by the transverse stiffeners, and in the cylinder frame by the cylinder pitch.

These engines include a crankshaft assembled from crank throws interconnected by main journals that each are supported by a main bearing. Each crank throw comprises two arms interconnected by a crank pin, the arms being connected with the associated main journals by means of a shrink connection comprising a main journal end portion shrink fitted into a bore in an arm. Each throw may be manufactured integrally or be assembled from two arms and a crankpin.

The throws of the largest engines weigh about 25 tons, with the complete crankshaft weighing up to ca. 400 tons. The crankshaft must be able to transmit a torque that may have peaks of up to ca. 12.000.000 Nm and the forces of the pistons acting on the crankshaft are equally enormous. The dimensions of the components of the crankshaft are determined in view of a large number of constructional aspects, whereby especially the to be transmitted forces and the forces created by the vibration behavior of the crankshaft influence the dimensioning of the respective parts. Further, the safety factor in the dimensioning of connections and components is regulated by the requirements of the respective ship classification societies.

The main journals of the large multi-cylinder two-stroke diesel engines of the crosshead type must withstand the large forces applied by the pistons to the crankshaft as well as the forces that are created by the oscillating masses and the vibration behavior of the crankshaft.

The main bearings of large two-stroke diesel engines are slide bearings in which the hydrodynamic effects of the rotational movement of the journal create a pressure that is built up in the oil film between the bearing surface of the bearing shells and the bearing surface of the journal with a pressure that lifts the journal from the bearing surface. A minimum oil film thickness has to be maintained to prevent wear of the bearing surfaces. The load on the individual main crankshaft bearings in large multi-cylinder two-stroke diesel engines of the crosshead type is not evenly distributed over the respective bearings, but varies from bearing to bearing. These variations originate from the dynamic mass forces created when the crankshaft is spinning and the resulting vibration behavior of the crankshaft. Bending of the throws caused by the combustion pressure forces and torsion in the non-centric crank throws caused by the fluctuating torque to be transmitted results in axial offsets and misalignments between the respective main bearings during engine operation, and thus, also contribute to the varying load on the respective bearings. Bending and torsion of the crankshaft caused by the combustion pressure forces and torsion in the non-centric crank throws caused by the fluctuating torque to be transmitted during engine operation also results in inclinations between the journal axis and the bearing axis that varies during each engine cycle.

Further, the forces acting on the crankshaft cause bending of the crankshaft, in particular at the throws resulting in inclination of the main journals relative to the main bearings. The inclination of the main journals is different from main journal to main journal in the crankshaft and this can lead to high edge pressures causing fatigue failures in the bearing material. High edge pressures are also related to low oil film thickness. Another problem with high pressures in the oil film that is common in these types of bearings is not related to misalignment and inclination, but relates to the profile of the oil film pressure in a direction along the main bearing axis.

Known main bearings for large two-stroke diesel engines are provided with so called blended edge bearing shells in order to accommodate the different degrees of misalignment of the respective bearings.

This so called "blended edge" design was introduced on thin shell white metal main bearings to better cope with crankshaft inclinations and thereby increase the resistance towards edge fatigue failures. The blended edge design is a smooth radius in a circumferential area adjoining the edge of the bearing shell that allows the main bearing shaft to incline without risking touching the edge of the bearing shell or causing high oil film pressure at the edge of the bearing shell.

A trade-off with blended edge bearings is the decreased bearing load capacity when the inclinations are small and the bearing force is very high. In such positions, plain bearings are required. If blended edge bearings are specified elsewhere in the same engine, the engine must be equipped with both plain- and blended edge shells as spare parts, which renders logistics more complicated and the engine more expensive because engines in ocean going vessels have to carry such essential spare parts on board.

EP 2041418 discloses a crankshaft according to the preamble of claim 1.

### DISCLOSURE OF THE INVENTION

On this background, it is an object of the invention to provide a crankshaft that overcomes or at least reduces the drawbacks associated with the prior art.

This object is achieved in accordance with claim 1 by providing a crankshaft for a reciprocating piston engine or compressor, the crankshaft having a plurality of throws that are interconnected by main journals, the main journals having a main journal bearing surface with a given width between the two axial ends of the main journal bearing surface, whereby at least one receding area is provided in the main journal bearing surface of at least one of the main journals, the at least one receding area adjoins one of the two axial ends and the receding area has a depth that generally decreases in the axial direction away from the one of the two axial ends that the receding area adjoins.

The inclination of the main journals relative to their respective main bearings during engine operation is different for all main bearings. Further, the inclination for the given main journal relative to its main bearing during engine operation varies with the angular position of the crankshaft, i.e. the main journal concerned may be perfectly aligned with its main bearing during most of the 360 degrees angular range of positions of the crankshaft, except for one or more specific angular ranges at specific angular positions and possibly with varying amount of inclination within said angular range or ranges.

By providing at least one locally receding area adjoining an axial end of the bearing surface of a main bearing journal, it becomes possible to apply the pressure relieving receding area exactly there where it is needed.

The positions around the circumference of a main bearing journal are affected by the same load for each revolution (at identical engine load), whereas the positions on main bearing shells are affected by a much larger spectrum of loads. Therefore the present invention provides a potential to optimize the blend to the specific parts of the journal instead of providing a full blend (rounded edge) for the whole lower bearing shell.

By providing the main journals with locally receding areas it becomes possible to use identical plain bearing shells for the whole engine.

Further, bearing shells are spare parts that are produced in much large numbers than crankshafts, and thus the advantages of having uniform bearing shells are high.

In an embodiment the depth is the depth relative to the generally cylindrical extent of the bearing surface of the main journal.

According to another embodiment the at least one receding area has a specific angular position and a specific angular extent (δ₁, δ₂) that covers a selected portion of the complete circumference of the main journal (5) concerned.

In an embodiment the crankshaft has a plurality of receding areas provided on selected main journals.

According to another embodiment the receding areas are individually adapted in accordance with the need of the main journal concerned.

According to yet another embodiment a single main journal is provided with a plurality of receding areas, possibly with receding areas adjoining each of the two axial ends and possibly with more than one receding area adjoining one of the axial ends.

According to yet another embodiment the depth (y) of the at least one receding area increases progressively in the axial direction towards the axial end that the receding area adjoins.

According to yet another embodiment the angular extent of the at least one receding area covers the complete circumferential extent of the main journal concerned.

The object above is also achieved by providing a bearing assembly with a plurality of main bearings and a crankshaft as above.

According to an embodiment the bearing assembly as above has bearing shells that are all plain bearing shells that have a completely cylindrical bearing surface.

The object above is also achieved by providing a large multi-cylinder two-stroke diesel engine of the crosshead type or a large compressor of the crosshead type comprising a crankshaft as above or bearing assembly as above.

Further objects, features, advantages and properties of the crankshaft, bearing assembly and engine or compressor according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a side view of a large conventional 8-cylinder two-stroke diesel engine including indications of the length of 9- to 12-cylinder engines,
Fig. 2 is a front view on the engine of Fig. 1,
Fig. 3 is a side view of a crankshaft according to an example embodiment of the invention,
Fig. 4 is a detailed view of a part of the crankshaft of Fig. 3.
Fig. 5A is a view of a cross girder of the bedplate of an engine according to an example embodiment of the invention with a main bearing support,
Fig. 5b is a detailed view on the bearing support of Fig. 5A showing the bearing cap and the bearing shells,
Fig. 6 is a partially length-sectional view in detail of a main journal and a crank throw of the crankshaft of Fig. 3, and
Fig. 7 is figure showing the location of receding areas on a main journal according to an example embodiment of the invention.

### DETAILED DESCRIPTION

In the following detailed description, a crankshaft, a bearing assembly and a large two-stoke diesel engine- or compressor of the crosshead type, will be described by the preferred embodiments.

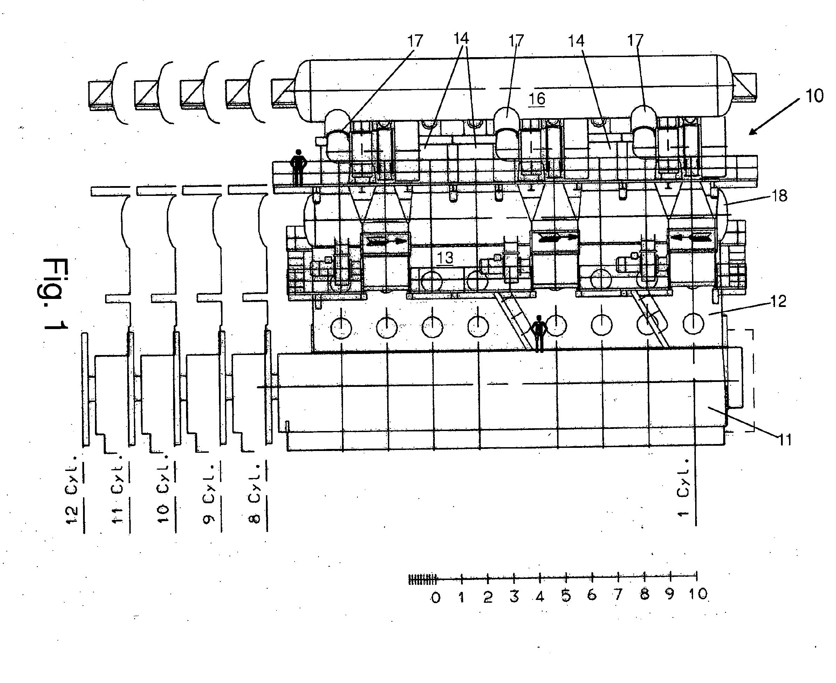

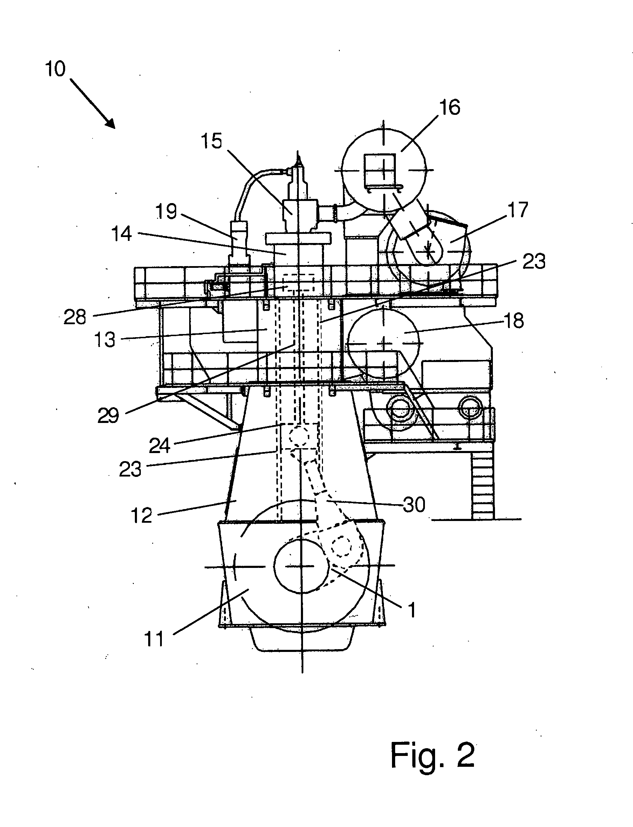

Figs. 1 and 2 show a large low-speed two-stroke crosshead diesel in-line engine 10 with a 98 cm piston diameter, which may be a propulsion engine in a ship or a prime mover in a power plant. These engines have typically from 6 up to 16 cylinders in line. In Fig. 1 a side view of an 8-cylinder engine 10 is depicted, together with additional lines that indicate the outline of 9-, 10-, 11- and 12-cylinder versions of this engine. Below the engine 10 a scale in meters is shown to provide an indication of the absolute size of these machines that range in length from about 18 meters for an 8-cylinder model to 34 meters for a 16-cylinder model.

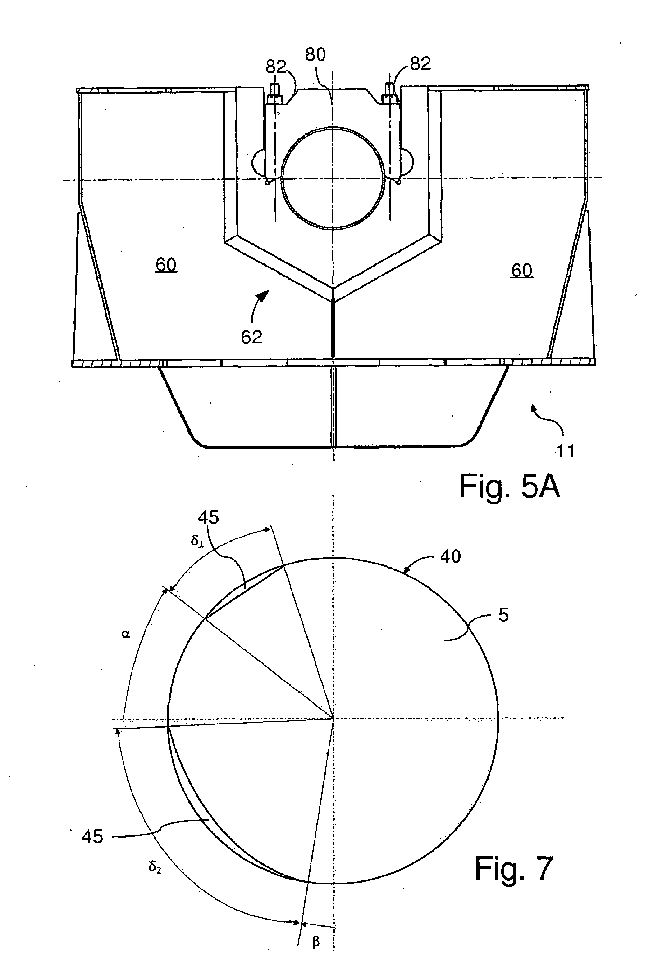

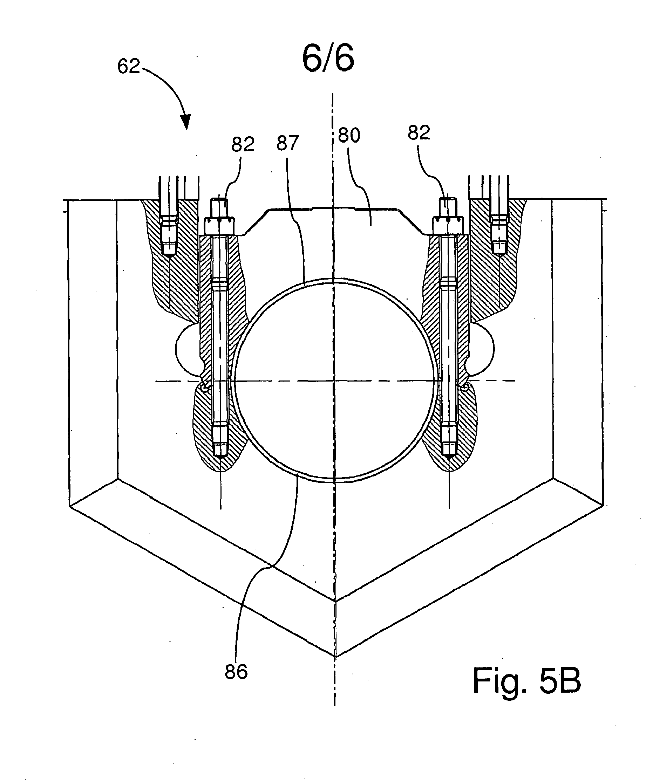

The engine is built up from a bedplate 11 with the main bearings for the crankshaft 1. The bedplate 11 is divided into sections of suitable size in accordance with production facilities available. The bedplate consists of welded, longitudinal girders and welded cross girders 60 with steel bearing supports 62 (Fig. 5).

With reference to the features shown by the interrupted lines in Fig. 2 the engine comprises pistons 28 that are connected via piston rods 29 to crossheads 24. The crossheads 24 are guided by guide planes 23. Connecting rods 30 connect the crossheads 24 with the crankpins 4 of the crankshaft 1.

A welded design A-shaped crankcase frame 12 is mounted on the bedplate 11. A cylinder frame 13 is mounted on top of the crankcase frame 12. Staybolts 26 (not shown) connect the bedplate 11 to the cylinder frame 13 and keep the structure together. The cylinders 14 are carried by the cylinder frame 13. An exhaust valve assembly 15 is mounted on the top of each cylinder 14. The cylinder frame 13 also carries a fuel injection system 19, an exhaust gas receiver 16, turbo chargers 17 and a scavenge air receiver 18.

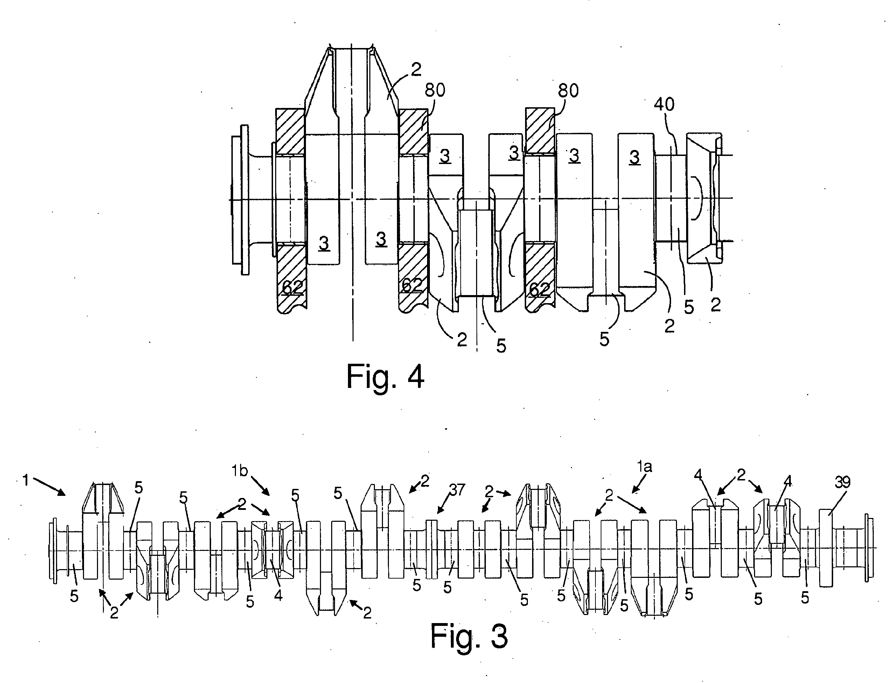

Fig. 3 shows a crankshaft 1 of 12 cylinder engine according to an example embodiment of the invention. The crankshaft has a fore end (at the left side of Fig. 3) and an aft end (output) end of the crankshaft 1(at the right side of Fig. 3). The crankshaft 1 is built up from a fore part 1b and an aft part 1a, since there are no cranes available on engine construction sites that are capable of lifting the complete crankshaft 1 that weighs approximately 400 tons. Each crankshaft part 1a,1b includes six of the in all twelve crank throws 2 (other combinations are possible, e.g. a 14.cylinder engine crankshaft could be divided in two parts with 4 throws and one part with 6 throws). The fore part 1b and the aft part 1a are lowered one by one with the main journals 5 into the respective bearing shells 86. Then, the fore- and aft crankshaft parts are assembled longitudinally by means of a flange connection 37. When the fore- and aft crankshaft parts are connected by bolting the flanges in the flange connection 37 together, and the bearing caps 80 are mounted, the crankcase frame 12 can be placed on the bedplate 11.

Each of the crankshaft parts 1a,1b is assembled from six crank throws 2 and seven main journals 5. The crank throws 2 have a crank pin 4 formed integrally with the two arms 3 of the crank throw 2. The crank throws 2 are made as one piece of cast or forged steel. The six crank throws 2 in each of the crankshaft parts 1a,1b are connected to one another (interconnected) by main journals 5 with the main journals 5 extending between the flanks of two throws 2. The total number of main bearings in the complete crankshaft of this embodiment is therefore 14.

The aft portion 1a includes a thrust bearing 39 that withstands the force created by a propeller driven via an intermediate shaft (not shown).

The main journals 5 have a central bearing section and two end sections which are shrink fitted into the bores in the arms 3 of the neighboring crank throws 2 when the crankshaft 1 is assembled. The main journals 5 that are located at the longitudinal extremities of the fore part 1b and aft part 1a have a bearing section and one end section which is shrink fitted into the associated bore in the arm of the respective crank throws 2.

Fig.5 shows a main bearing support 62 in a cross girder of the bedplate 11. The cross girder is a part of the welded design bedplate of the engine and comprises two web plates 60 (cross-girders) that carry the main bearing support 62.

The main bearing support 62 is provided with an upwardly facing recess, at the bottom of which is provided an arc shaped support surface on which the lower bearing shell 86 is placed (the lower bearing shell is preferably of the thin shell type, formed by a steel plate with bearing metal deposited thereon). The upwardly facing recess opens to the top surface 64 of the main bearing support. The upwardly facing recess is also provided with guide surfaces for guiding a bearing cap 80. The bearing cap 80 is provided with an arc shaped support surface for the upper bearing shell 87, which is also of the thin shell type, formed by a steel plate with bearing metal deposited thereon. The bearing cap 80 is held in place by hydraulically tensioned bolts 82 that are anchored in threaded bores that are provided in the body of the main bearing support 62.

The bearing shells 86,87 are of the so-called "thin shell" type which usually means a bearing in which thickness of the shell 86,87 is from 1.5 to 3 percent of the diameter of the journal 5 supported by the bearing. The conventional characteristics of the thin-shell bearing are that the shell 3,4 has to be supported the a main bearing support 62 and the bearing cap 80 over the full extent of the shell 86,87 since the thickness of the shell 86,87 itself is not sufficient for the shell 86,87 to support the bearing metal and thus, the bearing surface of the barring shells against the dynamic influences occurring during operation of the engine 10. The bearing cap 80 is tightened towards the bedplate 11 by means of bearing studs 82, and the bearing studs produce a holding force that keeps the shells 86,87 in place. The bearing surface of the bearing shells 86,87 is completely cylindrical, however, in an embodiment the bearing shells have a radius that is not completely constant and gradually varying from a maximum at the top and bottom areas of the bearing to a minimum at the left and right side of the bearing.

Each main bearing in an engine is subjected to an individual load and inclination orbit. The optimum blended edge positions can only be determined through EHD simulations.

Each of the main journals 5 has a main journal bearing surface 40 with a given width W in an axial direction between a fore end 42 and an aft end 43 of said main journal bearing surface 40 (fore- and aft to indicate towards which extremity of the crankshaft 1 the respective end of the main journal bearing surface 40 is positioned). The main journal bearing surface 40 is generally a perfectly cylindrical surface that cooperates with the perfectly cylindrical bearing surface of the bearing shells 86,87 for achieving maximum load bearing capacity. However, if both bearing surfaces are perfectly cylindrical over the full width and circumferential extent, inclination of the main journal 5 relative to axial of the main bearing will cause unacceptable pressures near the edge of the bearing shells 86,87 that eventually will destroy the bearing material of the bearing shells 86,87. The inclination of the main journal 5 relative to the main bearing axis during operation of the engine 10 depends on the angular position of the crankshaft 1 and may differ from main journal 5 to main journal 5. In order to avoid unacceptable high edge pressures on the bearing shells 86,87 some or all of the main journals 5 are provided with a receding area 45. The receding area 45 in the main bearing journal bearing surface 40 adjoins the fore- 42 or aft end 43 of the main journal bearing surface 40 and has an individually determined depth y, axial extent x and angular extent δ. The receding area 45 has a depth y that generally decreases in the axial direction away from the one of the two axial ends 42,43 that the receding area 45 adjoins.

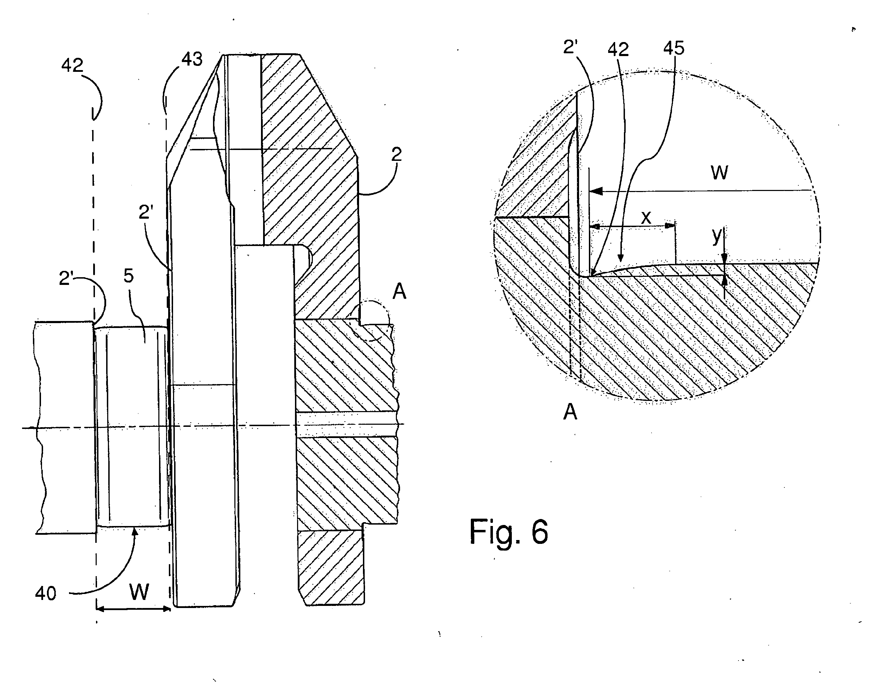

Figs. 6 and 7 show the receding area 45 in greater detail. The receding area 45 is described by length in the axial extent x relative to the fore- or aft end of the main journal bearing surface 40, depth in radial extent y (depth relative to the cylindrical extent of the main bearing surface), and angular position δ. In the axial direction X the depth y relative to the cylindrical extent of the central surface bearing area (and to the rest of the main journal bearing area except for any other receding area 45 in the same journal), generally decreases from a maximum at the fore- or aft end 42,43 of the main journal bearing surface 40 to zero at the at a position in the axial direction where the receding area 45 ends. Generally, the depth y of the receding area 45 increases progressively in the axial direction from the start of the receding area 45 towards the fore- or aft end of the bearing surface 40. In any case the deepest position of the recess 45 should be adjacent to the flank of the throw 2 because it is there where the depth y is most needed in order to accommodate inclination of the main journal 45 relative to its bearing, i.e. the depth y Of the recess 45 must not increase in the axial direction towards the throw 2 before the transition between the main journal 5 and the throw 2. The depth y of the receding area 45 in Fig. 6 has been greatly exaggerated in order to be able to visualize the receding area since the receding area would be difficult to distinguish with the naked eye.

As shown in Fig. 7, the receding area 45 can have an angular extent δ₁, δ₂ that is a portion of the complete circumference of the main journal 5. In this case, the angular extent δ₁, δ₂ of the receding area 45 generally decreases from a maximum at the fore- or aft end of the main journal bearing surface to zero at the at a position in the axial direction where the receding area 45 ends.

In an embodiment the depth y of the at least one receding area 45 increases progressively in the axial direction towards the axial end 42,43 that the receding area 45 adjoins.

In Fig. 7 two receding areas 45 are shown, one extending over an angle δ₁ and another one extending over an angle δ₂ (but there could be more than two receding areas 45 or only one receding area 45). The two receding areas 45 are separated by an angle α.

The number of receding areas 45, their position on the bearing surface, their depth, their extent in the x direction and their angular extent can be individually determined in accordance with the needs for each main journal 5 so as to keep maximum pressures in the oil film between the bearing surface of the bearing shells 86,87 and the bearing surface 40 of the main bearings below acceptable levels and at the same time provide as much as purely cylindrical bearing area as possible on the main journal 5 for maximum load bearing capacity. The optimum number, size, shape and position of the receding areas 45 is determined by numerical simulation of the operation of the crankshaft and its bearing in a running engine 10. A single main journal cab in an embodiment be provided with a plurality of receding areas 45, possibly with receding areas (45) adjoining each of the two axial ends 42,43.

The numerical simulation may include the combustion process in the cylinders 14 in order to get the cylinder pressure as a function of crankshaft position. The numerical simulation may also include firing sequence optimization. Firing order is chosen with regard to such criteria as its benefits to the dynamic properties of the crankshaft and shafting, the performance of all bearings as well as its effect on the engine's external forces and moments acting on the hull. The numerical simulation may also include crankshaft load and inclination calculation. To be able to optimize the crankshaft bearings the load and inclination for all main journals 5 are needed as a function of crankshaft position. A complete calculation to get bearing loads and inclinations for a 12-cylinder engine 10 consists of more than 4300 specific loads applied on the crankshaft 1. The applied loads results in more than 5000 specific reaction forces which are all combined to get the correct loads and inclination acting. Factors influencing the crankshaft journal's inclination are crankshaft stiffness due to its geometry, gas pressure, rotation speed, and firing sequence. The crankshaft stiffness in different degrees of freedom are calculated be finite element method. In the crankshaft deflection calculation the cylinder pressure as a function of crankshaft position is combined with chosen firing order. The numerical simulation may include individual bearing simulation. When the loads for each individual bearing are known the optimized shape of each main journal 5 can be calculated in order to get as high minimum oil film thickness and as low oil film pressure as possible. In the bearing simulation effects from oil properties are taken in account as well as the stiffness of the bearing support and bearing geometry. By iterating the oil film simulation with updated crankshaft journal geometry an optimized shape of the journal can be obtained, both in terms of depth and width of the individual receding areas 45 but also with in which angular position the receding areas 45 need to be placed.

In an embodiment the angular extent (δ₁, δ₂) of the at least one receding area 45 spans the complete circumferential extent of the main journal 5 concerned.

In an embodiment the depth profile in the axial direction follows a curve.

In an embodiment all of the lower bearing shells are of the plain type.

In an embodiment the journal bearing surface width W is identical with the width of the corresponding bearing shell width.

Thus, while the preferred embodiments of the devices and methods have been described in reference to the environment in which they were developed, they are merely illustrative of the principles of the inventions. Other embodiments and configurations may be devised without departing from the scope of the appended claims.

## Claims

1. An assembled crankshaft (1) for a slow-running large two-stroke crosshead diesel engine (10), said crankshaft (1) comprising:
a plurality of throws (2) that are interconnected by main journals (5),
said main journals (5) having a main journal bearing surface (40) with a given width (W) in an axial direction between the two axial ends of (42,43) of said main journal bearing surface (40),
**characterized in that** at least one receding area (45) is provided in said main journal bearing surface (40) of at least one of said main journals (45),
said at least one receding area (45) adjoins one of said two axial ends (42,43) and said receding area (45) has a depth (y) that decreases in the axial direction away from the one of the two axial ends (42,43) that the receding area (45) adjoins, said receding area (45) being configured to accommodate inclination of said main journal (5) relative to its bearing.

2. A crankshaft (1) according to claim 1, wherein said depth (y) is a depth relative to the generally cylindrical extent of the bearing surface (40) of the main journal (5).

3. A crankshaft (1) according to claim 1, wherein said at least one receding area (45) has a specific angular position and a specific angular extent (δ₁, δ₂) that covers a selected portion of the complete circumference of the main journal (5) concerned in order to accommodate inclination of said main journal (45) relative to its bearing.

4. A crankshaft (1) according to claim 1, comprising a plurality of receding areas (45) provided on selected main journals (5).

5. A crankshaft (1) according to claim 4, wherein said receding areas (45) are individually adapted in accordance with the need of the main journal (5) concerned.

6. A crankshaft (1) according to claim 4 or 5, wherein a single main journal is provided with a plurality of receding areas (45), possibly with receding areas (45) adjoining each of the two axial ends (42,43) and possibly with more than one receding area (45) adjoining one of the axial ends (42,43).

7. A crankshaft (1) according to claim 1, wherein the depth (y) of said at least one receding area (45) increases progressively in the axial direction towards the axial end (42,43) that the receding area (45) adjoins.

8. A crankshaft (1) according to claim 1, wherein the angular extent (δ₁, δ₂) of the at least one receding area (45) covers the complete circumferential extent of the main journal (5) concerned.

9. A bearing assembly comprising a plurality of main bearings (62,80,86,87) and a crankshaft (1) according to any one of claims 1 to 8.

10. A bearing assembly according to claim 9, wherein the bearing shells (86, 87) are plain bearing shells that have a completely cylindrical bearing surface.

11. A large multi-cylinder two-stroke diesel engine (10) of the crosshead type of the crosshead type comprising a crankshaft (1) according to any one of claims 1 to 8 or a bearing assembly according to claim 9 or 10.

## Patentansprüche

1. Gebaute Kurbelwelle (1) für eine langsam laufende große Zweitakt-Kreuzkopf-Dieselkraftmaschine (10), wobei die Kurbelwelle (1) Folgendes umfasst:
mehrere Kröpfungen (2), die durch Hauptlagerzapfen (5) miteinander verbunden sind,
wobei die Hauptlagerzapfen (5) eine Hauptlagerzapfen-Lagerfläche (40) mit einer gegebenen Breite (W) in einer axialen Richtung zwischen den zwei axialen Enden (42, 43) der Hauptlagerzapfen-Lagerfläche (40) haben,
**dadurch gekennzeichnet, dass** wenigstens ein zurücktretender Bereich (45) in der Hauptlagerzapfen-Lagerfläche (40) wenigstens eines der Hauptlagerzapfen (5) bereitgestellt wird,
wobei der wenigstens eine zurücktretende Bereich (45) an eines der zwei axialen Enden (42, 43) anstößt und der zurücktretende Bereich (45) eine Tiefe (y) hat, die in der axialen Richtung von dem einen der zwei axialen Enden (42, 43), an die der zurücktretende Bereich (45) anstößt, weg abnimmt, wobei der zurücktretende Bereich (45) dafür konfiguriert ist, eine Neigung des Hauptlagerzapfens (5) im Verhältnis zu seinem Lager aufzunehmen.

2. Kurbelwelle (1) nach Anspruch 1, wobei die Tiefe (y) eine Tiefe im Verhältnis zu der im Allgemeinen zylindrischen Ausdehnung der Hauptlagerzapfen-Lagerfläche (40) des Hauptlagerzapfens (5) ist.

3. Kurbelwelle (1) nach Anspruch 1, wobei wenigstens ein zurücktretender Bereich (45) eine spezifische Winkelposition und eine spezifische Winkelausdehnung (δ₁, δ₂), die einen ausgewählten Abschnitt des vollständigen Umfangs des betreffenden Hauptlagerzapfens (5) abdeckt, hat, um eine Neigung des Hauptlagerzapfens (5) im Verhältnis zu seinem Lager aufzunehmen.

4. Kurbelwelle (1) nach Anspruch 1, die mehrere zurücktretende Bereiche (45) umfasst, die an ausgewählten Hauptlagerzapfen (5) bereitgestellt werden.

5. Kurbelwelle (1) nach Anspruch 4, wobei die zurücktretenden Bereiche (45) einzeln in Übereinstimmung mit dem Bedarf des betreffenden Hauptlagerzapfens (5) angepasst sind.

6. Kurbelwelle (1) nach Anspruch 4 oder 5, wobei ein einzelner Hauptlagerzapfen mit mehreren zurücktretenden Bereichen (45), vorzugsweise mit zurücktretenden Bereichen (45), die an jedes der zwei axialen Enden (42, 43) anstoßen, und vorzugsweise mit mehr als einem zurücktretenden Bereich (45), der an eines der axialen Enden (42, 43) anstößt versehen ist.

7. Kurbelwelle (1) nach Anspruch 1, wobei die Tiefe (y) des wenigstens einen zurücktretenden Bereichs (45) zunehmend in der axialen Richtung zu dem axialen Ende (42, 43), an das der zurücktretende Bereich (45) anstößt, hin zunimmt.

8. Kurbelwelle (1) nach Anspruch 1, wobei die Winkelausdehnung (δ₁, δ₂) des wenigstens einen zurücktretenden Bereichs (45) die vollständige Umfangsausdehnung des betreffenden Hauptlagerzapfens (5) abdeckt.

9. Lagerbaugruppe, die mehrere Hauptlager (62, 80, 86, 87) und eine Kurbelwelle (1) nach einem der Ansprüche 1 bis 8 umfasst.

10. Lagerbaugruppe nach Anspruch 9, wobei die die Lagerschalen (86, 87) flache Lagerschalen sind, die eine vollständig zylindrische Lagerfläche haben.

11. Große Mehrzylinder-Zweitakt-Dieselkraftmaschine (10) vom Kreuzkopftyp, die eine Kurbelwelle (1) nach einem der Ansprüche 1 bis 8 oder eine Lagerbaugruppe nach Anspruch 9 oder 10 umfasst.

## Revendications

1. Vilebrequin assemblé (1) pour un gros moteur Diesel à crosse à deux temps à régime lent (10), ledit vilebrequin (1) comprenant :
une pluralité de coudes (2) qui sont interconnectés par des tourillons(5),
lesdits tourillons (5) ayant une surface de portée de tourillon (40) avec une largeur donnée (W) dans une direction axiale entre les deux extrémités axiales de (42, 43) de ladite surface de portée de tourillon(40),
**caractérisé en ce qu'**au moins une zone descendante (45) est prévue dans ladite surface de portée de tourillon (40) d'au moins un desdits tourillons (5),
ladite au moins une zone descendante (45) est attenante à une desdites deux extrémités axiales (42, 43) et ladite zone descendante (45) a une profondeur (y) qui diminue dans la direction axiale à l'opposé d'une des deux extrémités axiales (42, 43) à laquelle la zone descendante (45) est attenante, ladite zone descendante (45) étant configurée pour recevoir l'inclinaison dudit tourillon (5) par rapport à sa portée.

2. Vilebrequin (1) selon la revendication 1, dans lequel ladite profondeur (y) est une profondeur par rapport à l'extension généralement cylindrique de la surface de portée (40) du tourillon (5).

3. Vilebrequin (1) selon la revendication 1, dans lequel ladite au moins une zone descendante (45) a une position angulaire spécifique et une extension angulaire spécifique (δ₁, δ₂) qui couvre une partie sélectionnée de la circonférence complète du tourillon (5) concerné afin de recevoir l'inclinaison dudit tourillon (5) par rapport à sa portée.

4. Vilebrequin (1) selon la revendication 1 comprenant une pluralité de zones descendante (45) prévues sur les tourillons sélectionnés (5).

5. Vilebrequin (1) selon la revendication 4, dans lequel lesdites zones descendante (45) sont individuellement adaptées conformément au besoin du tourillon (5) concerné.

6. Vilebrequin (1) selon la revendication 4 ou 5, dans lequel un tourillon unique est prévu avec une pluralité de zones descendante (45), éventuellement avec des zones descendante (45) étant attenantes à chacune des deux extrémités axiales (42, 43) et éventuellement avec plus d'une zone descendante (45) étant attenante à une des extrémités axiales (42, 43).

7. Vilebrequin (1) selon la revendication 1, dans lequel la profondeur (y) de ladite au moins une zone descendante (45) augmente progressivement dans la direction axiale vers l'extrémité axiale (42, 43) à laquelle la zone descendante (45) est attenante.

8. Vilebrequin (1) selon la revendication 1, dans lequel l'extension angulaire (δ₁, δ₂) d'au moins une zone descendante (45) couvre l'extension circonférentielle complète du tourillon (5) concerné.

9. Ensemble de paliers comprenant une pluralité de paliers principaux (62, 80, 86, 87) et un vilebrequin (1) selon l'une quelconque des revendications 1 à 8.

10. Ensemble de paliers selon la revendication 9, dans lequel les coquilles de palier (86, 87) sont des coquilles de palier lisse qui ont une surface de portée complètement cylindrique.

11. Gros moteur Diesel à deux temps multicylindres (10) de type à crosse comprenant un vilebrequin (1) selon l'une quelconque des revendications 1 à 8 ou ensemble de paliers selon la revendication 9 ou 10.
